# EUROPÄISCHE PATENTSCHRIFT

(11) **EP 2 912 310 B1**
(45) Veröffentlichungstag und Bekanntmachung des Hinweises auf die Patenterteilung: **02.11.2016**
(21) Anmeldenummer: 13766345.6
(22) Anmeldetag: 25.09.2013
(51) Int. Cl.: F04B 11/00, F04B 15/02, F04B 43/02, F04B 43/067, F16K 7/07, F16L 55/053, F16L 55/054

(54) **KOLBEN-MEMBRANPUMPE**
PISTON MEMBRANE PUMP
POMPE À PISTON MEMBRANE

(30) Priorität: 10.10.2012 DE 102012109634
(43) Veröffentlichungstag der Anmeldung: 02.09.2015
(73) Patentinhaber: MHWirth GmbH, 41812 Erkelenz (DE)
(72) Erfinder: GIESSBACH, Alfred, 41812 Erkelenz (DE)
(74) Vertreter: Kluin, Jörg-Eden
(86) Internationale Anmeldenummer: PCT/EP2013/069952
(87) Internationale Veröffentlichungsnummer: WO 2014/056724

(56) Entgegenhaltungen:
- EP-A1- 0 484 575
- WO-A1-95/20106
- DE-A1- 4 328 520
- DE-A1-102010 060 532
- US-A- 4 177 016
- US-A- 6 089 837
- US-A- 6 123 525

## Beschreibung

Die Erfindung betrifft eine Kolben-Membranpumpe, mit einer Saugleitung zum Ansaugen des zu fördernden Mediums.

Kolben-Membranpumpen dienen der Förderung von Flüssigkeiten oder Gasen. Ihr Funktionsprinzip ähnelt der Kolbenpumpe, wobei jedoch das fördernde Medium durch eine Membran vom Antrieb getrennt ist. Durch diese Trennmembran ist somit der Antrieb von schädlichen Einflüssen des Fördermediums abgeschirmt. Auch ist das Fördermedium von schädlichen Einflüssen des Antriebs getrennt.

Bei einer Kolben-Membranpumpe wird die oszillierende Bewegung des Kolbens über ein Arbeitsmedium auf die Membran übertragen. Als Arbeitsmedium kann Wasser mit einem wasserlöslichen Mineralzusatz oder insbesondere ein Hydrauliköl verwendet werden. Dementsprechend wird das Volumen, welches mit dem Arbeitsmedium gefüllt ist, auch "Ölvorlage" bezeichnet. Durch das konstante Volumen der Ölvorlage zwischen Kolben und Membran bewirkt die Bewegung des Kolbens direkt einen Ausschlag der Membran und ruft somit Saug- und Druckimpulse hervor.

Aus der EP 0 484 575 A1 ist eine Anordnung mit einer Kolben-Membranpumpe zum Fördern von Trüben und Schlämmen bekannt.

Die US 6,089,837 A offenbart einen Pumpen-Einlass-Stabilisierer mit einem Gehäuse und einer elastomerischen Blase.

Die US 6,123,525 zeigt einen Pulsationsdämpfer, der elastische Patronen aufweist.

Grundsätzlich betrifft die Erfindung Kolben-Membranpumpen jedweder Größe und jedweden Verwendungszwecks. Insbesondere bezieht sich die Erfindung jedoch auf Kolben-Membranpumpen, die zur Förderung von Schlamm, auch Dickstoff genannt, bei Erdarbeiten vorgesehen sind. Derartige Kolben-Membranpumpen sind für den Dauereinsatz konzipiert und müssen zuverlässig über lange Zeiträume, bis hin zu Jahren, möglichst störungsfrei arbeiten, da ein Austausch einer defekten Kolben-Membranpumpe aufgrund deren Größe regelmäßig mit einem erheblichen Arbeits- und Zeitaufwand verbunden ist.

Derartige Dickstoffpumpen sind insbesondere zur Förderung von sehr großen Mengen an Dickstoff vorgesehen. Ein vielfach eingesetzter Dickstoffpumpentyp der Anmelderin, der zwei doppelt wirkende Kolben und somit vier Membranen umfasst, fördert bis zu mehr als 700 m³/h bei einem Förderdruck von etwa 50 bar. Derartigen Dickstoffpumpen wird der zu fördernde Dickstoff saugleitungsseitig mit einem Überdruck, typischerweise in der Größenordnung einiger bar, dem sogenannten "Ladedruck" zugeführt. Um auf Seiten der Saugleitung durch Pumpenhübe verursachte Druckschwankungen zu reduzieren, ist in die Saugleitung regelmäßig ein Druckwindkessel eingeschaltet.

Zwar haben sich derartige Kolben-Membranpumpen zur Förderung von Dickstoff seit langem bewährt, gleichwohl besteht stets das Streben nach einer weiteren Erhöhung der bei einer bestimmten Förderleistung zu erwartenden Lebensdauer bzw. einer Erhöhung der Förderleistung bei gleichbleibender Lebensdauer mit einem möglichst geringen, konstruktiven und fertigungstechnischen Aufwand. Diese Aufgabe wird durch die in Anspruch 1 wiedergegebene Kolben-Membranpumpe gelöst.

Diese Kolben-Membranpumpe zeichnet sich dadurch aus, dass in der Saugleitung ein dynamisches Volumenspeicherelement vorgesehen ist. Mit "dynamischem Volumenspeicherelement" ist ein Bauteil gemeint, welches geeignet ist, druckabhängig bezogen auf die Fördermenge pro Zeiteinheit ein im Vergleich zur pro Stunde geförderten Fördermenge sehr geringes Volumen (beispielsweise L 1 ‰ der pro Stunde geförderten Fördermenge) des zu fördernden Mediums (auch "Fördermedium" genannt) schnell aufzunehmen und auch schnell wieder abzugeben. Das dynamische Volumenspeicherelement ist mit anderen Worten derart ausgebildet, dass es bei einer Erhöhung des Drucks in der Saugleitung diese im Vergleich zur Fördermenge pro Zeiteinheit sehr geringen Volumina an Fördermedium schnell aufzunehmen, und bei einem Druckabfall in der Saugleitung auch schnell Mengen des Fördermediums druckabhängig wieder abzugeben. Überraschenderweise hat sich gezeigt, dass durch ein derartiges dynamisches Volumenspeicherelement ohne sonstige Konstruktionsänderungen die Anzahl der Pumpenhübe pro Zeiteinheit messbar erhöht werden kann, ohne dass es zu Kavitationseffekten im Bereich zwischen Einlass- und Auslassventil, zudem auch die Membrankammer gehört, kommt. Darüber hinaus hat sich gezeigt, dass die erfindungsgemäße KolbenMembranpumpe eine gegenüber einer ansonsten baugleichen, jedoch kein dynamisches Volumenspeicherelement in der Saugleitung aufweisenden KolbenMembranpumpe verbesserte Füllung des Pumpenraumes mit Fördermedium aufweist. Darüber hinaus zeigt die erfindungsgemäße Kolben-Membranpumpe weniger Vibrationen verglichen mit einer baugleichen Kolben-Membranpumpe bei derselben Förderleistung, die jedoch nicht mit einem dynamischen Volumenspeicherelement versehen ist.

Die Verbesserung der Eigenschaften der erfindungsgemäßen Kolben-Membranpumpe erklärt sich möglicherweise dadurch, dass das dynamische Volumenspeicherelement die Beschleunigung des vor dem Verschlusselement des Einlassventils in Ruhe befindlichen Fördermediums durch Abgabe einer geringen Menge desselben bei einem Druckabfall zu Beginn eines Saughubes unterstützt, so dass in einem kurzen Zeitraum ein größerer Volumenstrom durch das Einlassventil bei ansonsten gleichbleibenden Pumpenparametern realisiert wird.

Das dynamische Volumenspeicherelement kann - sofern es die Fähigkeit der druckabhängigen schnellen Aufnahme und Abgabe von zumindest geringen Mengen des Fördermediums erlaubt - in jeder beliebig denkbaren Weise ausgebildet sein, die es dem dynamischen Volumenspeicherelement ermöglicht, in der Saugleitung vorgesehen zu werden. Besonders bevorzugt ist eine Ausführungsform des dynamischen Volumenspeicherelements, welche einen Verdrängungskörper umfasst, dessen Verdrängungsvolumen elastisch veränderbar ist. Das Verdrängungsvolumen dieses dynamischen Volumenspeicherelements ist somit abhängig vom Druck, unter dem das Fördermedium steht. Bei einer Erhöhung dieses Druckes reduziert sich also das Volumen des dynamischen Volumenspeicherelements, was gleichbedeutend ist mit der Aufnahme einer der Volumenreduzierung entsprechenden Menge an Fördermedium. Entsprechend umgekehrt vergrößert dieses dynamische Volumenspeicherelement sein Volumen bei einem Druckabfall, was gleichbedeutend mit der Abgabe einer der Volumenvergrößerung entsprechenden Menge an Fördermedium ist.

In einer bevorzugten, konstruktiven Ausgestaltung umfasst der Verdrängungskörper eine elastisch verformbare Hülle, die einen mit einem unter Druck stehenden Gas gefüllten oder befüllbaren Druckraum umschließt. Die Hülle kann beispielsweise aus einem gummielastischen Material bestehen, solange es gegenüber dem Fördermedium inert ist.

Auch kann der Verdrängerkörper ein erstes und ein zweites Endstück umfassen, wobei die Außendurchmesser der Endstücke an den Innendurchmesser der Hülle derart angepasst sind, dass die Hülle mit ihren Endbereichen gasdicht abschließend mit den Endstücken verbindbar oder verbunden ist. Der Verdrängungskörper zeichnet sich dann durch eine besonders einfache Herstellbarkeit aus, wobei insbesondere dann, wenn die Hülle an den Endstücken mit wahlweise montierbaren Klemmschellen befestigt ist, auch im Schadensfalle einfach austauschbar ist. Darüber hinaus besonders bevorzugt sind die Endstücke mittels eines im Innern der Hülle angeordneten Abstandshalters, dessen Außendurchmesser kleiner als der Innendurchmesser der Hülle ist, voneinander beabstandet fest miteinander verbunden. Der Druckraum wird dann gebildet durch den zwischen der inneren Mantelfläche der Hülle und der äußeren Mantelfläche des Abstandshalters, in dessen Längsrichtung begrenzt durch die Endstücke, definierten Ringraum.

Um die Eigenschaften des dynamischen Volumenspeicherelements an veränderte Betriebsbedingungen, beispielsweise veränderte Fördermengen pro Zeiteinheit oder insbesondere an unterschiedliche Ladedrücke anpassen zu können, ist das dynamische Volumenspeicherelement vorzugsweise derart ausgebildet, dass der Gasdruck im Druckraum variierbar ist.

Hierzu kann beispielsweise das erste Endstück einen Durchgangskanal aufweisen, der in den Druckraum mündet, wobei außen an dem ersten Endstück Mittel zum Anschluss einer Gasdruckquelle vorgesehen sind.

Diese Mittel können ein Absperrventil umfassen, so dass nach Beaufschlagung des dynamischen Volumenspeicherelements mit einem gewünschten Gasdruck die Verbindung zur Gasdruckquelle wieder aufgehoben werden kann.

Vorzugsweise ist ein Anzeigeinstrument zum Anzeigen des Gasdrucks in der Druckkammer des dynamischen Volumenspeicherelements vorgesehen. Aufgrund dieser Maßnahme lässt sich während des Betriebs der erfindungsgemäßen Kolben-Membranpumpe der Gasdruck in der Kammer überwachen. Hierdurch können ohne unnötige Verzögerung geeignete Maßnahmen ergriffen werden, sollte sich der Gasdruck in der Druckkammer in unvorteilhafter Weise verändern.

Weitere Einzelheiten, Merkmale und Vorteile der Erfindung ergeben sich aus der nachstehenden Erläuterung eines Ausführungsbeispiels anhand der beigefügten Zeichnung. Es zeigen:
- Fig. 1: eine perspektivische Ansicht dieses Ausführungsbeispiels einer als Dickstoff-Pumpe dienenden Kolben-Membranpumpe;
- Fig. 2: - ausschnittsweise und teilgeschnitten - dieselbe Kolben-Membranpumpe in einer Ansicht von schräg links, jedoch ohne Druckwindkessel;
- Fig. 3: - wiederum ausschnittsweise und teilgeschnitten - dieselbe KolbenMembranpumpe in einer Ansicht gemäß Fig. 2 von links;
- Fig. 4: eine perspektivische Ansicht des bei der Kolben-Membranpumpe gemäß Fig. 1 bis 3 verwendeten Ausführungsbeispiels eines dynamischen Volumenspeicherelements in einer Einzeldarstellung;
- Fig. 5: einen verkürzten Teilschnitt durch das Ausführungsbeispiel des dynamischen Volumenspeicherelements gemäß Fig. 4;
- Fig. 6: eine Ansicht gemäß Fig. 5 von links;
- Fig. 7: den zeitabhängigen Druckverlauf in der Saugleitung in der Nähe eines Einlassventils bei dem Ausführungsbeispiel der Kolben-Membranpumpe gemäß Fig. 1 bis 3, jedoch ohne dynamisches Volumenspeicherelement sowie
- Fig. 8: den zeitlichen Verlauf des Drucks in der Saugleitung an derselben Stelle bei demselben Ausführungsbeispiel der Kolben-Membranpumpe, jedoch mit eingesetztem dynamischen Volumenspeicherelement.

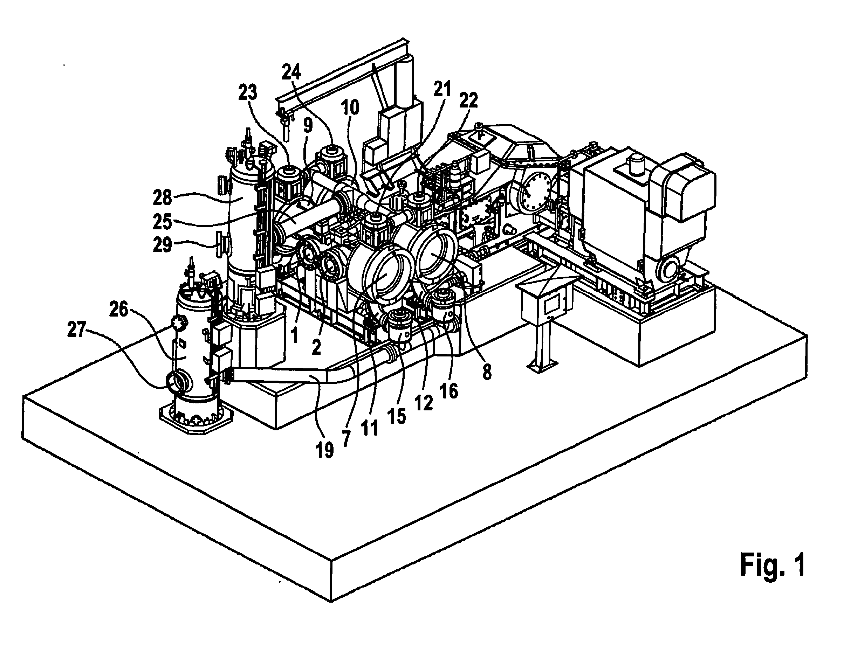

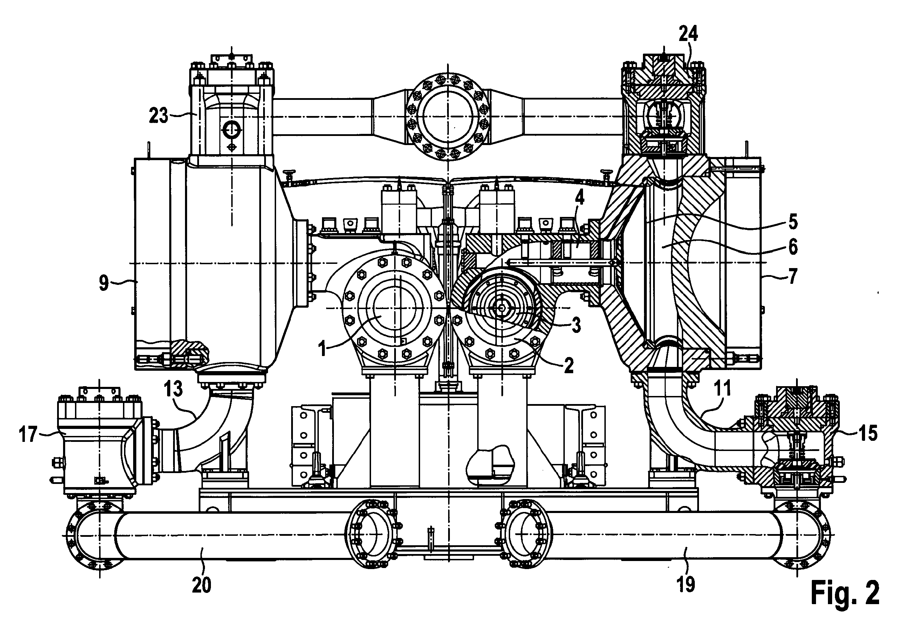

Die in Fig. 1 dargestellte und als Ganzes mit 100 bezeichnete Kolben-Membranpumpe ist zum Pumpen von Dickstoff vorgesehen und wird nachfolgend auch als "Dickstoffpumpe" bezeichnet. Sie ist als doppelt wirkende Duplexpumpe ausgebildet. Sie umfasst also zwei etwa gegenläufig angetriebene Kolben, die in zwei parallel zueinander angeordneten Zylindern arbeiten. Die Zylindergehäuse sind in der Zeichnung mit 1 und 2 bezeichnet. In der teilgeschnittenen Ansicht gemäß Fig. 2 ist der in dem rechten Zylinder arbeitende Kolben 3 erkennbar. Beide Kolben-Zylinderanordnungen sind doppelt wirkend ausgebildet. Beidseitig des Kolbens befinden sich also Arbeitsflüssigkeitsvolumina, von denen lediglich das zur Aufsichtseite des Kolbens 3 gehörende Arbeitsflüssigkeitsvolumen 4 in Fig. 2 erkennbar ist. Diese Arbeitsflüssigkeitsvolumina sind mit Arbeitsflüssigkeit, meist einem Hydrauliköl, gefüllt. Die auch in Fig. 2 nicht dargestellte Arbeitsflüssigkeit - auch Ölvorlage genannt - füllt das Arbeitsvolumen bis zu einer Membran 5, die in einer Membrankammer 6 angeordnet ist. Wiederum ist lediglich in Fig. 2 nur eine Membran und eine Membrankammer aufgrund des Teilschnittes erkennbar.

Die Kolben-Membranpumpe 100 umfasst für jede Kolben/Zylinderanordnung gemäß der doppelt wirkenden Ausbildung zwei getrennte Arbeitsflüssigkeitsvolumina, Membranen und Membrankammern, wie dies durch die vier in Fig. 1 erkennbaren Membrangehäuse 7, 8, 9, 10 deutlich wird.

Jedes Membrangehäuse weist einen unteren Ansaugkrümmer 11, 12, 13, 14 auf, der jeweils über ein Einlassventil 15, 16, 17, 18 in eine von zwei Saugleitungen 19, 20 münden.

Ferner ist an jedem Membrangehäuse 7, 8, 9, 10 auf der dem jeweiligen Ansaugkrümmer 11, 12, 13, 14 gegenüberliegenden Seite ein Auslassventil 21, 22, 23, 24 angeordnet. Die Auslassventile sind auslassseitig über Rohrstücke mit einer gemeinsamen Druckleitung 25 verbunden.

Die beiden Saugleitungen 19 und 20 münden in einem saugseitigen Druckwindkessel 26, welchem das zu fördernde Medium zu seinem Einlass 27 unter einem Druck von typischerweise einigen bar, dem sogenannten Ladedruck, zugeführt wird. Der Druckwindkessel dient der Vergleichmäßigung des Druckes und der Vermeidung von Schwingungen durch den Pumpvorgang auf der Saugseite.

Auch die Druckleitung 25 mündet in einen druckseitigen Druckwindkessel 28. An seinen Ausgang 29 ist im Betrieb eine in der Zeichnung nicht dargestellte Druckleitung angeschlossen, über welche das Fördermedium zur gewünschten Stelle gepumpt wird. Der Druckwindkessel 28 dient der Vermeidung von druckseitigen Druckschwankungen und Vibrationen.

Die beiden jeweils zu einer doppelt wirkenden Kolben-Zylindereinheit gehörenden Einlassventile und Auslassventile arbeiten jeweils gegenphasig. Befindet sich beispielsweise das zum Membrangehäuse 9 gehörende Einlassventil 17 im Ansaugtakt, d.h. ist es geöffnet, so befindet sich das zum Membrangehäuse 10 gehörende Einlassventil 18 im Auslasstakt, d.h. es ist geschlossen. Dies bedeutet, dass über die Saugleitung 20 bereitgestelltes Fördermedium abwechselnd über das Einlassventil 17 und das Einlassventil 18 durch den jeweils zugehörigen Krümmer 13, 14 in die jeweilige Membrankammer gelangt und beim jeweiligen Drucktakt durch das zugehörige Auslassventil 23 bzw. 24 der Druckleitung 25 zugeführt wird.

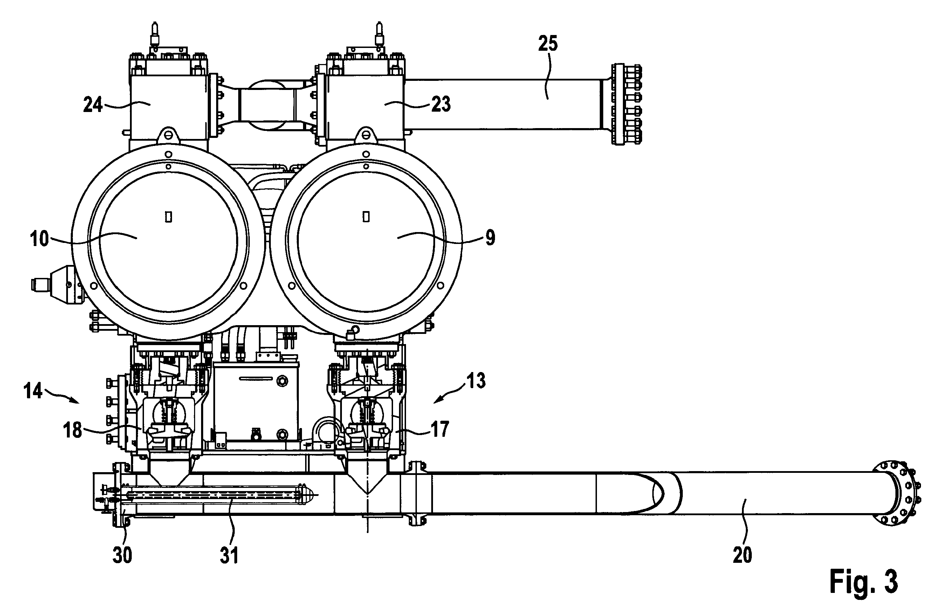

Wie in Fig. 3 erkennbar ist, weist die erfindungsgemäße Kolben-Membranpumpe ein vom blinden Ende 30 her in die Saugleitung 20 hineinragendes dynamisches Volumenspeicherelement 31 auf. Die in Fig. 3 nicht erkennbare, von der Saugleitung 20 überdeckte Saugleitung 19 ist in entsprechender Weise ebenfalls mit einem zweiten dynamischen Volumenspeicherelement ausgestattet.

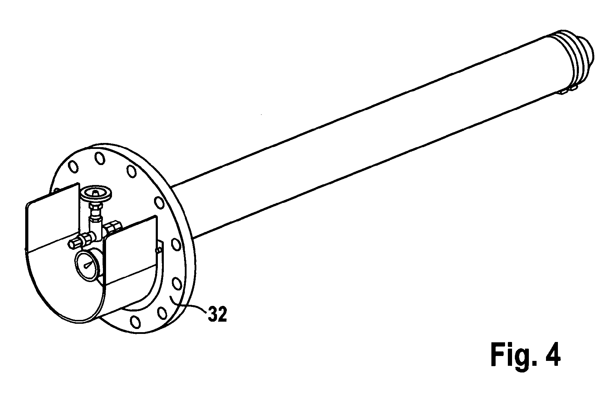

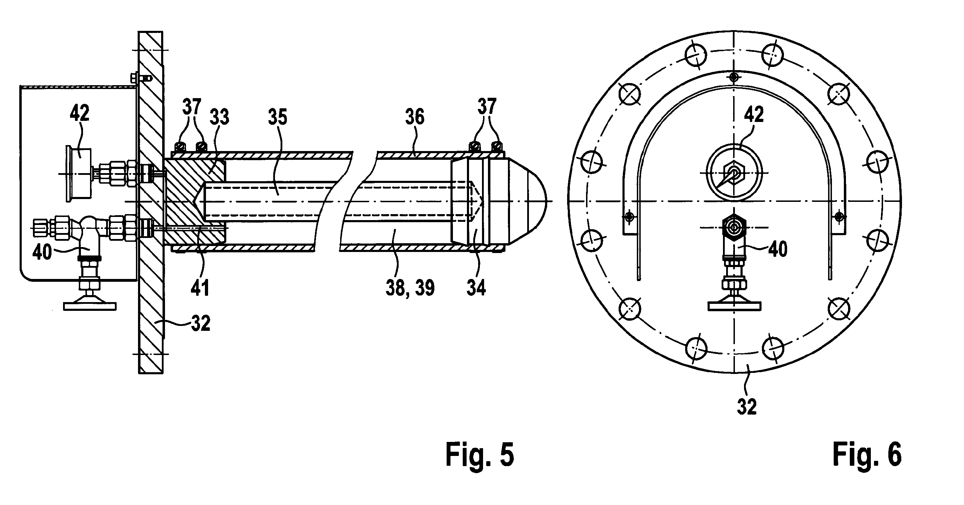

Das dynamische Volumenspeicherelement umfasst - wie insbesondere in Fig. 4 bis 6 dargestellt ist - einen Flansch 32, mittels welchem es in der jeweiligen Saugleitung 19, 20 montiert ist und welcher die jeweilige Saugleitung 19, 20 zum jeweils blinden Ende abdichtend verschließt.

An dem Flansch 32 ist ein erstes Endstück 33 befestigt. Mit diesem ersten Endstück 33 ist ein zweites Endstück 34 über einen Abstandshalter 35 verbunden. An den äußeren Mantelflächen der beiden Endstücke 33, 34 ist eine flexible Hülle 36 mit Hilfe von Schlauchschellen 37 befestigt. Zwischen der äußeren Mantelfläche des Abstandshalters 35 und der inneren Mantelfläche der flexiblen Hülle 36 ist somit ein Ringraum 38 zwischen den ersten und zweiten Endstücken 33, 34 definiert, welcher gasdicht nach außen abgeschlossen ist.

Der Ringraum 38 bildet dementsprechend einen Druckraum 39 für ein unter Druck stehendes, gasförmiges Medium, welches über ein Absperrventil 40 und einen von diesem wahlweise absperrbaren Durchgangskanal 41 in den Druckraum 39 einleitbar ist. Der Überdruck gegenüber der Atmosphäre, der in dem Druckraum 39 herrscht, kann mit Hilfe eines angeschlossenen Druckmessgeräts 42, hier ausgeführt als Manometer, abgelesen werden. Aufgrund der Flexibilität der Hülle und die Kompressibilität des Gases im Druckraum stellt das dynamische Volumenspeicherelement 31 einen Verdrängungskörper 43 dar, dessen Verdrängungsvolumen elastisch veränderbar ist.

Wie bereits erwähnt, wird das zu pumpende Fördermedium den Saugleitungen 19, 20 unter einem Überdruck ("Ladedruck") zur Verfügung gestellt. Versuche haben gezeigt, dass bei der hier dargestellten Ausführungsform der Kolben-Membranpumpe sich der Einsatz des dynamischen Volumenspeicherelements 31 besonders positiv auswirkt, wenn das Gas im Innern des Druckraums 39 einen Druck aufweist, der etwa einem Drittel des Ladedrucks entspricht.

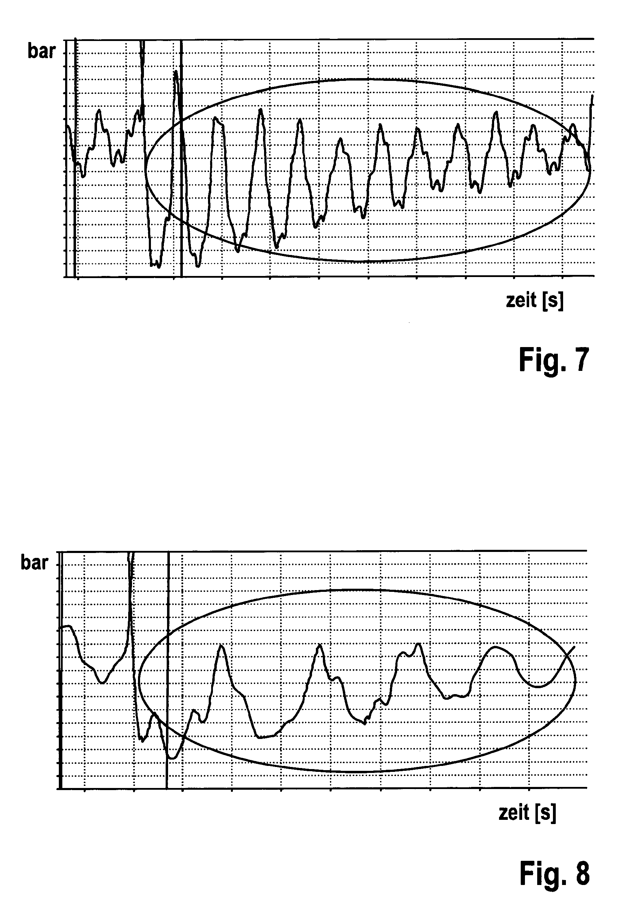

Die günstigen Auswirkungen des Einsatzes eines dynamischen Volumenspeicherelements in Saugleitungen von Kolben-Membranpumpen lassen sich etwa wie folgt erklären:
Während des Drucktaktes einer Pumpeneinheit, d.h. während sich deren Einlassventil im geschlossenen Zustand befindet, liegt das Fördermedium im Wesentlichen statisch unter etwa dem Ladedruck an dem Schließorgan des Einlassventils an. Nach Überschreiten des Totpunkts und damit Einleiten des Saughubs fällt der Druck innerhalb der Membrankammer ab, so dass unter dem Ladedruck das Einlassventil gegen die Kraft einer den Schließsitz bewirkenden Feder öffnet. Aufgrund der Trägheit der Masse des Fördermediums fließt dies jedoch nicht entsprechend der Druckdifferenz in die Membrankammer hinein. Dies führt zu einer wachsenden Druckdifferenz zwischen dem Innern der Membrankammer und dem Innern der Saugleitung, was schließlich zu einem zwar zeitverzögerten, jedoch schnelleren Einströmen des Fördermediums in die Membrankammer führt. Dabei steigt der Druck in der Membrankammer schnell wieder an, d.h. die Druckdifferenz zwischen dem Innern der Membrankammer und dem Innern der Saugleitung sinkt. Dieser Vorgang wiederholt sich während eines Saughubes mehrfach, wie in Fig. 7 symbolisiert ist. Dabei ist die Dauer des Zeithubes durch das Oval gekennzeichnet. In Fig. 7 ist der Überdruck gegenüber der Umgebung, unter dem das Fördermedium in der Nähe eines Einlassventils steht, in Abhängigkeit der Zeit während eines Saugtaktes aufgetragen.

Durch die hier erkennbaren Druckschwankungen, die auch im Hinblick auf das Vorhandensein des saugseitigen Druckwindkessels 26 überraschend sind, vollzieht das Schließorgan des Einlassventils während des Saughubes eine stetige Hin- und Herbewegung mit einer relativ hohen Frequenz, was sich nicht nur auf den Füllgrad der Membrankammer während des Saugtakts negativ auswirkt, sondern auch zu einer Erhöhung des Verschleißes des Ventils führt.

Bei der erfindungsgemäßen Kolben-Membranpumpe ist durch den Einsatz des dynamischen Volumenspeicherelements der Druckverlauf in dem Saugrohr während eines Saugtaktes deutlich geglättet, wie durch Vergleich von Fig. 8 und Fig. 7 ohne weiteres erkennbar ist. In Fig. 8 ist der Druckverlauf in dem Saugrohr an derselben Stelle wie in Fig. 7 aufgenommen, jedoch mit eingesetztem dynamischen Volumenspeicherelement.

Der glättende Effekt des dynamischen Volumenspeicherelements ist möglicherweise dadurch erklärlich, dass es bei Druckspitzen einen Volumenanteil des sich in der Saugleitung befindlichen Fördermediums aufnimmt, um diesen Anteil dann bei einem Druckabfall wieder abzugeben. Das Einlassventil führt im Ergebnis während des Saugtaktes lediglich weniger und auch langsamere Bewegungen durch, was sich Verschleiß mindernd auswirkt. Darüber hinaus wird der Füllgrad mit Fördermedium in der Membrankammer verbessert. Durch die geringeren Druckschwankungen reduziert sich die Gefahr der Kavitation. Bei gleicher Förderleistung wie ohne den Einsatz eines dynamischen Volumenspeicherelements ist daher eine höhere Lebensdauer einer ansonsten baugleichen KolbenMembranpumpe zu erwarten. Gleichsam kann unter Beibehaltung der Lebensdauer die Förderleistung erhöht werden, wenn ein dynamisches Volumenspeicherelement zum Einsatz kommt.

Der Einsatz eines dynamischen Volumenspeicherelements ist auch insbesondere in Situationen von Vorteil, in denen es aufgrund der Konstruktion der Kolben-Membranpumpe zu besonderen Schwingungen aufgrund abwechselnd öffnender und schließender, mit ein und derselben Förderleitung kommunizierender Einlassventile kommen kann. Solche Verhältnisse können beispielsweise bei dem hier dargestellten Ausführungsbeispiel der Kolben-Membranpumpe aufgrund der Wirkungen der abwechselnd öffnenden und schließenden Einlassventile 17, 18 bzw. 15, 16 insbesondere in dem Bereich der Saugleitung 20 bzw. 19 herrschen, in welchen die Einlassventile münden. Dementsprechend ist es von Vorteil, bei derartigen Verhältnissen ein dynamisches Volumenspeicherelement derart anzuordnen, wo mit Strömungsschwingungen, Turbulenzen etc. aufgrund sich gegenseitig beeinflussender Ströme durch verschiedene Ventile zu rechnen ist.

### Bezugszeichenliste:

- 100: Kolben-Membranpumpe
- 1: Zylindergehäuse
- 2: Zylindergehäuse
- 3: Kolben
- 4: Arbeitsflüssigkeitsvolumen
- 5: Membran
- 6: Membrankammer
- 7: Membrangehäuse
- 8: Membrangehäuse
- 9: Membrangehäuse
- 10: Membrangehäuse
- 11: Ansaugkrümmer
- 12: Ansaugkrümmer
- 13: Ansaugkrümmer
- 14: Ansaugkrümmer
- 15: Einlassventil
- 16: Einlassventil
- 17: Einlassventil
- 18: Einlassventil
- 19: Saugleitung
- 20: Saugleitung
- 21: Auslassventil
- 22: Auslassventil
- 23: Auslassventil
- 24: Auslassventil
- 25: Druckleitung
- 26: Druckwindkessel
- 27: Einlass
- 28: Druckwindkessel
- 29: Ausgang
- 30: Blindes Ende
- 31: Dynamisches Volumenspeicherelement
- 32: Flansch
- 33: erstes Endstück
- 34: zweites Endstück
- 35: Abstandshalter
- 36: flexible Hülle
- 37: Schlauchschellen
- 38: Ringraum
- 39: Druckraum
- 40: Absperrventil
- 41: Durchgangskanal
- 42: Druckmessgerät
- 43: Verdrängungskörper

## Patentansprüche

1. Kolben-Membranpumpe (100),
mit einer Saugleitung (19, 20) zum Ansaugen des zu fördernden Mediums, wobei in der Saugleitung (19, 20) ein dynamisches Volumenspeicherelement (31) vorgesehen ist, **dadurch gekennzeichnet, dass** dem dynamischen Volumenspeicherelement (31) ein Druckwindkessel (26) in Förderrichtung des Mediums gesehen vorgeschaltet ist.

2. Kolben-Membranpumpe nach Anspruch 1, **dadurch gekennzeichnet, dass** das dynamische Volumenspeicherelement (31) einen Verdrängungskörper (43) umfasst, dessen Verdrängungsvolumen elastisch veränderbar ist.

3. Kolben-Membranpumpe nach Anspruch 2, **dadurch gekennzeichnet, dass** der Verdrängungskörper (43) eine elastisch verformbare Hülle (36) umfasst, die einen mit einem unter Druck stehenden Gas gefüllten oder befüllbaren Druckraum (39) abschließt.

4. Kolben-Membranpumpe nach Anspruch 3, **dadurch gekennzeichnet, dass** der Verdrängungskörper (43) ein erstes und ein zweites Endstück (33, 34) umfasst, wobei die Außendurchmesser der Endstücke (33, 34) an den Innendurchmesser der Hülle (36) derart angepasst sind, dass die Hülle (36) mit ihren Endbereichen gasdicht abschließen mit den Endstücken (33, 34) verbindbar oder verbunden ist.

5. Kolben-Membranpumpe nach Anspruch 4, **dadurch gekennzeichnet, dass** die Endstücke (33, 34) mittels eines im Innern der Hülle (36) angeordneten Abstandshalters (35), dessen Außendurchmesser kleiner als der Innendurchmesser der Hülle (36) ist, voneinander beabstandet fest miteinander verbunden sind.

6. Kolben-Membranpumpe nach einem der Ansprüche 3 bis 5, **dadurch gekennzeichnet, dass** der Gasdruck im Druckraum (39) variierbar ist.

7. Kolben-Membranpumpe nach Anspruch 4 bis 6, **dadurch gekennzeichnet, dass** das erste Endstück (33) einen Durchgangskanal (41) aufweist, der in den Druckraum (39) mündet, wobei außen an dem ersten Endstück (33) Mittel zum Anschluss einer Gasdruckquelle vorgesehen sind.

8. Kolben-Membranpumpe nach Anspruch 7, **dadurch gekennzeichnet, dass** die Mittel ein Absperrventil (40) umfassen.

9. Kolben-Membranpumpe nach einem der Ansprüche 3 bis 8, **dadurch gekennzeichnet, dass** ein Anzeigeinstrument zum Anzeigen des Gasdrucks in der Druckkammer (39) vorgesehen ist.

## Claims

1. A piston membrane pump (100)
having suction line (19, 20) for sucking in the medium to be conveyed, wherein a dynamic volume storage element (31) is provided in the suction line (19, 20), **characterised in that** an air pressure vessel (31) is arranged upstream of the dynamic volume storage element (26) when viewed in a conveying direction of the medium.

2. The piston membrane pump according to claim 1, **characterised in that** the dynamic volume storage element (31) comprises a displacement body (43), the displacement volume of which being elastically modifiable.

3. The piston membrane pump according to claim 2, **characterised in that** the displacement body (43) comprises an elastically deformable sleeve (36) that terminates with a pressure chamber (39) that is filled or fillable with a pressurised gas.

4. The piston membrane pump according to claim 3, **characterised in that** the displacement body (43) comprises a first and a second end piece (33, 34), wherein the outer diameters of the end pieces (33, 34) are adapted to the inner diameter of the sleeve (36) such that the sleeve (36) terminates gas-proof with its end regions [and] is connectable or connected with the end pieces (33, 34).

5. The piston membrane pump according to claim 4, **characterised in that** the end pieces (33, 34) are spaced from one another [and] tightly connected to one another by means of a spacer (35) being arranged inside the sleeve (36), the outer diameter of which being smaller than the inner diameter of the sleeve.

6. The piston membrane pump according to any one of claims 3 to 5, **characterised in that** the gas pressure in the pressure chamber (39) is variable.

7. The piston membrane pump according to claim 4 to 6, **characterised in that** the first end piece (33) has a passage channel (41) opening into the pressure chamber (39), wherein means for connecting a gas pressure source are provided on the outside of the first end piece (33).

8. The piston membrane pump according to claim 7, **characterised in that** the means comprise a check valve.

9. The piston membrane pump according to any one of claims 3 to 8, **characterised in that** a display instrument is provided for displaying the gas pressure in the pressure chamber (39).

## Revendications

1. Pompe à membrane à piston (100), comprend un conduit d'aspiration (19, 20) destiné l'aspiration du fluide à refouler, un élément de stockage volumique dynamique (31) est prévu dans le conduit d'aspiration (19, 20), **caractérisé en ce qu'**un réservoir d'air sous pression (26) est monté en amont de l'élément de stockage volumique dynamique (31) par référence à la direction de refoulement du fluide.

2. Pompe à membrane à piston selon la revendication 1, **caractérisée en ce que** l'élément de stockage volumique dynamique (31) comprend un corps de déplacement (43) dont le volume de déplacement peut varier élastiquement.

3. Pompe à membrane à piston selon la revendication 2, **caractérisée en ce que** le corps de déplacement (43) comporte une enveloppe (36) déformable élastiquement qui ferme une chambre de pression (39) remplie ou pouvant être remplie avec un gaz sous pression.

4. Pompe à membrane à piston selon la revendication 3, **caractérisée en ce que** le corps de déplacement (43) comprend des première et seconde pièces d'extrémité (33, 34), le diamètre extérieur des pièces d'extrémité (33, 34) étant adaptée au diamètre intérieur de l'enveloppe (36) de telle sorte que l'enveloppe (36) est reliée ou peut être reliée aux pièces d'extrémité (33, 34) en fermant de façon étanche aux gaz leurs régions d'extrémité.

5. Pompe à membrane à piston selon la revendication 4, **caractérisée en ce que** les pièces d'extrémité (33, 34) sont reliées solidairement entre elles en étant espacées l'une de l'autre au moyen d'une entretoise (35) qui est disposée à l'intérieur de l'enveloppe (36) et dont le diamètre extérieur est inférieur au diamètre intérieur de l'enveloppe (36).

6. Pompe à membrane à piston selon l'une des revendications 3 à 5, **caractérisée en ce que** la pression du gaz dans la chambre de pression (39) est variable.

7. Pompe à membrane à piston selon l'une des revendications 4 à 6, **caractérisée en ce que** la première pièce d'extrémité (33) comporte un conduit de passage (41) qui débouche dans la chambre de pression (39), des moyens étant prévus à l'extérieur au niveau de la première pièce d'extrémité (33) pour le raccordement à une source de gaz sous pression.

8. Pompe à membrane à piston selon la revendication 7, **caractérisée en ce que** les moyens comprennent un clapet anti-retour (40).

9. Pompe à membrane à piston selon l'une des revendications 3 à 8, **caractérisée en ce qu'**un instrument d'affichage est prévu pour afficher la pression du gaz dans la chambre de pression (39).
